# EUROPÄISCHE PATENTSCHRIFT

(11) **EP 2 272 610 B1**
(45) Veröffentlichungstag und Bekanntmachung des Hinweises auf die Patenterteilung: **16.01.2013**
(21) Anmeldenummer: 10006988.9
(22) Anmeldetag: 07.07.2010
(51) Int. Cl.: B23B 31/02

(54) **Spannfutter für ein Werkzeug**
Collet check for a tool
Mandrin pour un outil

(30) Priorität: 07.07.2009 DE 102009032182; 02.09.2009 DE 102009039683
(43) Veröffentlichungstag der Anmeldung: 12.01.2011
(60) Teilanmeldung: 12194330.2
(73) Patentinhaber: Gühring OHG, 72458 Albstadt (DE)
(72) Erfinder: Klaus, Matheis, 88605 Sauldorf/Rast (DE)
(74) Vertreter: Meitinger, Thomas Heinz

(56) Entgegenhaltungen:
- DE-A1- 19 836 912
- DE-A1-102005 013 483
- DE-A1-102008 039 197
- DE-U1-202008 013 763

## Beschreibung

Die Erfindung betrifft ein Spannfutter für ein Werkzeug nach dem Oberbegriff des Anspruchs 1.

### Stand der Technik:

Aus der internationalen Patentanmeldung WO 2004/073910 A2 ist ein Spannfutter für ein Werkzeug bekannt. Das Spannfutter besitzt eine Vorrichtung zur Zuführung eines Kühl- und/oder Schmiermediums an einen Mediumkanal eines im Spannfutter gehaltenen Werkzeugs. Im Spannfutter ist eine Hülse angeordnet, welche als Kupplung für eine Zuführleitung für die Versorgung mit Kühl- und/oder Schmiermedium dient, wobei in der Hülse ein Rohrelement steckt, dem eine Stellschraube nachgeordnet ist. Die Stellschraube ist gegenüber dem Spannfutter in Richtung der Längsachse des Spannfutters verstellbar und dient als Anschlag für ein Werkzeug, um dessen Spanntiefe zu justieren.

Das Rohrelement ist in der Hülse in Richtung der Längsachse des Spannfutters verschiebbar. Es kann auf der dem Werkzeug entgegen gesetzten Seite über ein Stellwerkzeug betätigt werden, wobei das Rohrelement mit der Stellschraube fest verbunden ist.

Aus der DE 20 2008 013 763 U1, die als nächstliegender Stand der Technik angesehen werden kann, ist ein Spannfutter bekannt, bei dem ein direkt mit einem Futterkörper des Spannfutters spindelndes Anschlagstück gegenüber einem drehfest mit ihm verbundenen Schneckenrad eines Schneckentriebes teleskopierbar ist. Eine Anschlagstückaufnahme des Schneckenrades weist eine Längsnut auf, in die zur Verdrehsicherung ein mit dem Anschlagstück zugeordnetes Sicherungsglied eingreift.

Aus der DE 2005 013 483 A1 ist ein Werkzeughalter bekannt, bei dem eine

Anschlaghülse drehfest aber axial beweglich mit einem axial in die Anschlaghülse eingreifenden Stellrohr gekuppelt ist.

Aus der DE 198 36 912 A1 ist ein Dehnspannfutter bekannt, bei dem ein Anschlagstück mit einem Schneckenrad gekoppelt und in einem Futterkörper des Dehnspannfutters gehalten ist, wobei eine Drehbewegung des Schneckenrads in eine Axialbewegung des Anschlagstücks umgesetzt wird.

Die De 10 2008 039 197 A1 offenbart ein Spannfutter, bei dem ein Längenanschlag für ein Werkzeug von einem Längenverstelglied in axialer Richtung verstellt werden kann.

### Aufgabe und Vorteile der Erfindung:

Der Erfindung liegt die Aufgabe zugrunde, ein Spannfutter vorzuschlagen, bei welchem bei einfacher Einstellbarkeit einer Spanntiefe für ein Werkzeug vielfältige Realisationsmöglichkeiten für die Ausführung einer Spanntiefeneinstellung zur Verfügung stehen.

Diese Aufgabe wird durch die Merkmale des Anspruchs 1 gelöst.

Die Erfindung geht von einem Spannfutter für ein Werkzeug mit einer Vorrichtung zur Zuführung eines Kühl- und/oder Schmiermediums an einen Mediumkanal eines in dem Spannfutter gehaltenen Werkzeugs aus. Im Spannfutter ist eine Stellschraube angeordnet, die als Anschlag für das im Spannfutter gehaltene Werkzeug dient, wobei die Stellschraube gegenüber dem Spannfutter in axialer Richtung des Spannfutters verstellbar ist. Die Stellschraube steht mit einem Rohrelement in Wirkzusammenhang.

Erfindungsgemäß ist ein Innensechskantprofil des Rohrelements passend auf einen Außensechskant-Profilabschnitt der Stellschraube abgestimmt und an diesem Außensechskant-Profilabschnitt der Stellschraube ein Außengewinde vorhanden. Das Rohrelement ist im Spannfutter drehbar aufgenommen, wobei Sicherungsmittel vorgesehen sind, die eine axiale Verschiebung zumindest in Richtung der Stellschraube begrenzen, insbesondere vollständig verhindern und dass das Rohrelement und die Stellschraube fest, aber axial verschiebbar zueinander verbunden sind. Eine Begrenzung der axialen Verschiebung erfolgt in einem vorgegebenen Bereich, vorzugsweise nicht durch Abstützung des Rohrelements an der Stellschraube, sondern durch Abstützung am verbleibenden Spannfutter.

Durch diese Maßnahme ist es möglich, das Rohrelement mittels eines Werkzeugs zu drehen und dabei die Drehung auf die Stellschraube zu übertragen, wobei sich diese dann zum Beispiel entlang eines Gewindes vom Rohrelement entfernt oder sich auf dieses zu bewegt, je nachdem in welche Richtung gedreht wird.

Vorteilhafterweise sind Sicherungsmittel am Rohrelement ausgebildet.

Da das Rohrelement axial bewegungslimitiert, insbesondere ortsfest in Bezug auf die Stellschraube angeordnet ist, lässt es sich in vielfältiger Weise in eine darüber hinaus gehende Führung für Kühl- und/oder Schmiermedium insbesondere im Spannfutter integrieren.

Ein weiterer wesentlicher Aspekt der Erfindung ist darin zu sehen, dass Mittel vorgesehen sind, um das Rohrelement von außerhalb des Spannfutters zu betätigen. So kann von außen am Spannfutter auf das Rohrelement eingewirkt und damit die Stellschraube bedient werden. Insbesondere kann von einem seitlichen Bereich am Spannfutter das Rohrelement verdreht werden. Insbesondere kann am Spannfutter die Einstellung der Spanntiefe für das eingesetzte Werkzeug auch dann vorteilhaft erledigt werden, wenn das Spannfutter z. B. an einer Spindel einer Werkzeugmaschine angekuppelt ist und das Rohrelement axial von der Seite des Spannfutters nicht zugänglich ist, die der Seite des eingesetzten Werkzeugs gegenüberliegt.

Vorteilhafterweise sind die Mittel derart ausgebildet, das Rohrelement in radialer Richtung des Spannfutters zu betätigen. Die Bedienung des Rohrelements kann z. B. am Spannfutter senkrecht oder schräg zu einer Längsachse des Spannfutters erfolgen. So kann z. B. bei ungünstigen bzw. erschwerten räumlichen Verhältnissen in Bereichen der Umgebung des Spannfutters, ein Zugang in gut zugänglichen Bereichen am Spannelement eingerichtet werden. Damit kann das Rohrelement und damit die Stellschraube unkompliziert bzw. mit einem vergleichsweise geringen Zusatzaufwand verdreht werden. Die geeignete radiale bzw. räumliche Ausrichtung eines Zugangs zu den Mitteln kann variabel eingerichtet werden, zum Beispiel in einem Spann- oder einem Mittelabschnitt des Spannfutters.

Weiter wird vorgeschlagen, dass die Mittel ein von außerhalb des Spannfutters betätigbares drehgelagertes Koppelelement umfassen, das mit dem Rohrelement gekoppelt ist. Mit dem Koppelelement wird eine Verbindung von außen am Spannfutter zum innenliegenden Rohrelement realisiert. Dies kann platzsparend zum Beispiel mit einem bolzen- oder stiftartigen Element in einer geeignet gestalteten Aufnahme im Spannfutter gelöst werden. Das Koppelelement z. B. ein drehgelagerter Bolzen kann über Dichtungsmittel dicht im Spannfutter aufgenommen sein. Insbesondere kann mit einem geeigneten Drehwerkzeug auf eine von außen zugängliche Eingriffkontur am Koppelelement eingewirkt werden, um das Koppelelement von außen in beiden Drehrichtungen verdrehen zu können.

Zur Übertragung der Drehbewegung des Koppelelements auf das Rohrelement, deren Längsachsen räumlich unterschiedlich ausgerichtet sind, kann eine geeignete Getriebe- bzw. Kupplungsanordnung vorgesehen sein, z. B. eine Reibkupplung bzw. ein Winkelgetriebe wie beispielsweise ein Zahngetriebe insbesondere ein Kegelradgetriebe.

Nicht erfindungsgemäß ist eine Hülse vorgesehen, welche als Kupplung für eine Zuführleitung für die Versorgung mit Kühl- und/oder Schmiermedium dient, wobei das Rohrelement in der Hülse steckt. Vorzugsweise ist der Übergang zwischen der Hülse und dem Rohrelement mit einer Dichtung, zum Beispiel einer Lippendichtung abgedichtet. Es ist vorteilhaft, wenn sich das Rohrelement in der Hülse verdrehen kann. Denkbar ist auch, dass das Rohrelement in der Hülse über die Sicherungsmittel eine axiale Bewegungssicherung erhält.

Ebenfalls nicht erfindungsgemäß schließt das Rohrelement in Richtung Stellschraube betrachtet, insbesondere dichtend an die Hülse an.

In diesem Fall ist es vorteilhaft, wenn das Rohrelement eine axiale Bewegungssicherung durch Sicherungsmittel erhält, die in einem Spannfuttergrundkörper des Spannfutters oder einem Teil, das darin befestigt ist, ausgebildet sind.

Die axiale Bewegungssicherung des Rohrelements kann über einen Sicherungsring erfolgen, der zum Beispiel einerseits in einer Ausnehmung, insbesondere Nut am Rohrelement und andererseits in einer Ausnehmung, insbesondere Nut am verbleibenden

Spannfutter so eingepasst ist, dass sich das Rohrelement in Bezug zum Sicherungsring zwar drehen kann, jedoch eine axiale Bewegung gegebenenfalls im Rahmen eines Spiels blockiert ist.

Alternativ oder zusätzlich können die Sicherungsmittel einen Anschlag am Rohrelement und einen dazu passenden Gegenanschlag am verbleibenden Spannfutter umfassen. Denkbar ist zum Beispiel ein Anschlagkragen am Rohrelement, der an einem Absatz am Spannfuttergrundkörper anliegen kann, sodass zwar eine Drehung, aber ab einer vorgegebenen axialen Lage des Rohrelements kein axiales Verrücken, insbesondere in Richtung Werkzeug, möglich ist.

Das Rohrelement kann über einen Teil der Stellschraube übergestülpt sein. Wichtig dabei ist, dass sich die Stellschraube und das Rohrelement axial zueinander verschieben können, jedoch eine gegenseitige Verdrehung unterbunden ist. Dies kann zum Beispiel durch einen Schiebesitz erreicht werden, in der Art von Nut und Feder.

Erfindungsgemäß sind ineinander steckende nicht verdrehbare Querschnitte, wie zum Beispiel ein Mehrkant oder eine Art Verzahnung.

Das Rohrelement kann insbesondere auch dann von einem Werkzeug von außen bedienbar sein und dabei um seine Längsachse verdreht werden, wenn das Rohrelement außen an der Stellschraube angreift, zum Beispiel an einem Außenabschnitt der Stellschraube aufgeschoben bzw. überstülpend vorhanden ist. Bei einer Verdrehung des Rohrelements erfolgt die Drehübertragung auf die Stellschraube. Die axiale Relativbewegbarkeit zwischen dem Rohrelement und der Stellschraube ist davon unberührt ebenfalls gegeben. Vorteilhafterweise ist zumindest ein umfänglich umlaufender Abschnitt außen an der Stellschraube umgriffen von dem Rohrelement. Demgemäß kann die Stellschraube mit einem oder insbesondere mit beiden Längs-Endabschnitten axial am Rohrelement überstehen.

Das Rohrelement ist insbesondere mit einer durchgehenden Öffnung versehen, in welcher die Stellschraube zumindest eingreift oder ganz durchgreift.

Die Stellschraube kann beispielsweise wenigstens in dem Abschnitt, welcher von dem Rohrelement umgriffen wird, mit einer entsprechenden Drehübertragungskontur beispielsweise mit einem Außensechskant- oder Außenzahnprofil versehen sein, das auf ein dazu passendes Gegen-Innenprofil an dem Rohrelement passt.

Auf der zum Spannabschnitt gerichteten Seite der Stellschraube ist insbesondere der am Rohrelement überstehende Abschnitt der Stellschraube mit einem Außengewinde versehen. Dieses Außengewinde kämmt mit einem entsprechenden Gegengewinde in einer Öffnung im Spannfutter. Mit dem Verdrehen des Rohrelements mit einem Werkzeug und dem Mitdrehen der Stellschraube wird stufenlos eine axiale Einstellung der Stellschraube und damit eine stufenlose axiale Einstellung für ein im Spannfutter eingesetztes Werkzeug vorgenommen. Die vorbeschriebene Anordnung ist insbesondere im Hinblick auf eine Werkzeugbedienbarkeit, Montierbarkeit, kompakte Bauweise und eine sichere Drehmomentübertragung vom Rohrelement auf die Stellschraube vorteilhaft.

In einer weiteren besonders bevorzugten Ausgestaltung der Erfindung ist das Rohrelement auf der dem Werkzeug entgegen gesetzten Seite über ein Stellwerkzeug betätigbar.

Ein Eingriff kann auch an der Stellschraube ausgebildet sein. Ein Eingriff an der Stellschraube oder am Rohrelement lässt sich zum Beispiel als Schlitz, Innenvielkant, insbesondere Innensechskant oder Innentorxaufnahme realisieren.

### Beschreibung der Ausführungsbeispiele:

Mehrere Ausführungsbeispiele der Erfindung und nicht erfindungsgemäße Ausführungen sind in den Zeichnungen dargestellt und werden unter Angabe weiterer Vorteile und Einzelheiten nachstehend näher erläutert.

In den Figuren 1a und 1b bis Figuren 5a und 5b ist jeweils in einem Querschnitt entlang der Längsachse sowie einem vergrößerten Ausschnitt, der in der Querschnittsansicht jeweils markiert ist, ein nicht erfindungsgemäßes Spannfutter dargestellt.

Figur 6a zeigt stark schematisiert und perspektivisch teils in Explosionsdarstellung eine erste Ausführungsform von Teilen eines erfindungsgemäßen Spannfutters mit einer Stellschraube und einem Rohrelement samt dazugehörigem Einwirkelement.

Figur 6b zeigt die Anordnung gemäß Figur 6a in einer weiteren perspektivischen Ansicht, wobei die Stellschraube vom Rohrelement gemäß einem funktionsrichtig zusammengebauten Zustand des Spannfutters umgriffen ist.

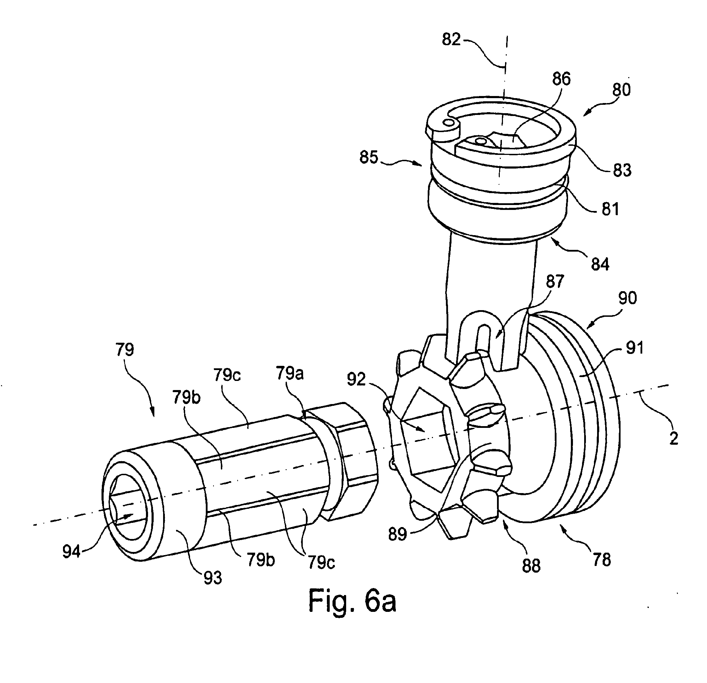

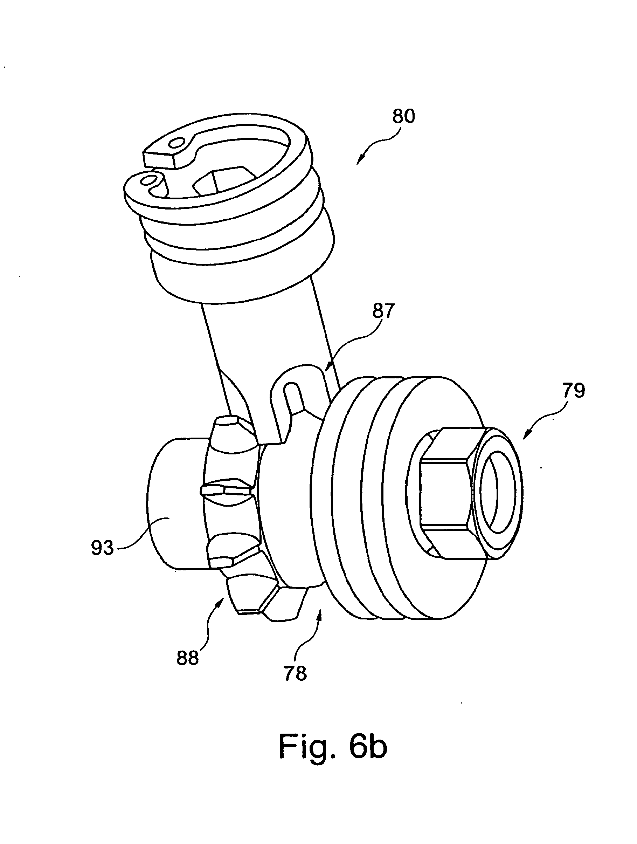

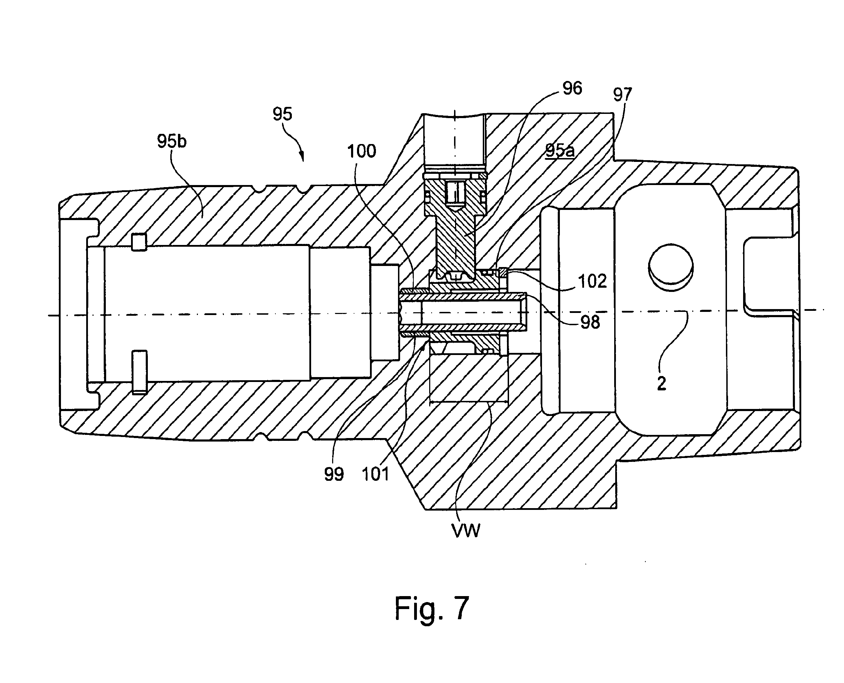

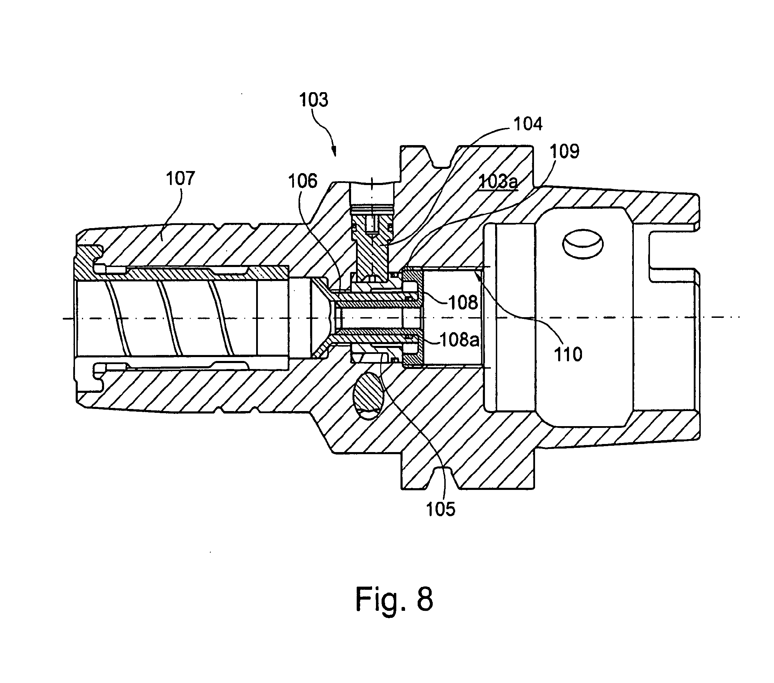

Weitere Ausführungsbeispiele eines erfindungsgemäßen Spannfutters im Schnitt mit einem gemäß der Figuren 6a und 6b dargestellten Verstellprinzip zeigen die Figuren 7 und 8.

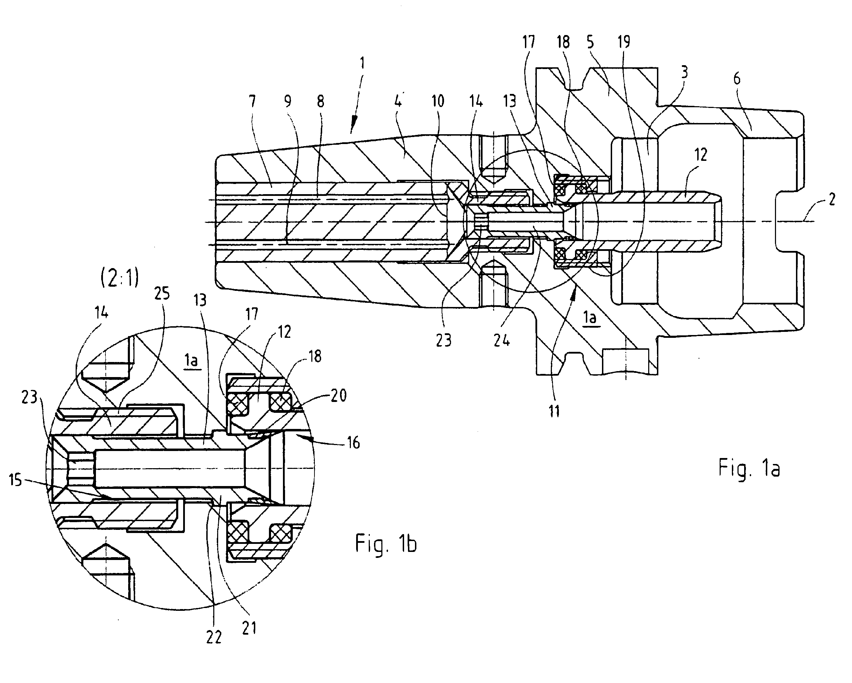

In Figur 1a und 1b ist ein nicht erfindungsgemäßes Spannfutters 1 dargestellt. Das Spannfutter 1 besitzt eine Längsachse 2 entlang dieser eine Bohrung 3 das Spannfutter 1 durchläuft. Die Bohrung 3 besitzt abschnittsweise unterschiedliche Durchmesser.

Das Spannfutter 1 umfasst einen Spannabschnitt 4 , einen Mittelabschnitt 5 und einen Kupplungsabschnitt 6 .

Der Spannabschnitt 4 ist dazu vorgesehen, ein Werkzeug 7 (in Figur 1a ist lediglich der hintere Teil eines Werkzeugs abgebildet) aufzunehmen, welches Mediumkanäle 8, 9 zum Transport von Kühl-/Schmiermedium an eine nicht dargestellte Werkzeugspitze aufweist. Die Mediumkanäle 8, 9 gehen am Werkzeug 7 von einer Bodenfläche 10 aus. Im Mittelabschnitt 5 ist in der Bohrung 3 eine Vorrichtung 11 zur Zuführung von Kühl-/Schmiermedium an die Mediumkanäle 8, 9 angeordnet.

Über den Kupplungsabschnitt 6 erfolgt die Ankupplung des Spannfutters an eine nicht dargestellte Spindel einer Werkzeugmaschine, wobei von der Spindel über eine Leitung (ebenfalls nicht dargestellt) Kühl-/Schmiermedium der Vorrichtung 11 zugeführt wird.

Die Vorrichtung 11 besteht im Wesentlichen aus einer Hülse 12, einem Rohrelement 13 sowie einer Stellschraube 14.

Das Rohrelement 13 steckt auf einer Seite in einer Öffnung 15 der Stellschraube 14 und auf der anderen Seite in einer Öffnung 16 der Hülse 12. Beide Öffnungen 15, 16 sind Durchgangsöffnungen. Die Hülse 12 ist mit zwei O-Ringen 17, 18 mittels eines Schraubenelements 19 in einen Spannfuttergrundkörper 1a eingeschraubt. Durch eine Lagerung der Hülse 12 zwischen den O-Ringen 17, 18 kann sich die Hülse 12 elastisch in einem geringen Ausmaß aus der Achse 2 des Spannfutters 1 herausbewegen.

In der Hülse 12 verschiebbar und drehbar ist das Rohrelement 13 gelagert. Um einen dichten Übergang zwischen den beiden Elementen 12, 13 zu realisieren, ist am Rohrelement 13 eine Lippendichtung 20 vorgesehen.

Das Rohrelement 13 besitzt einen umlaufenden Kragen 21, der in Richtung eines Werkzeugs 7 in der dargestellten Position an einem Absatz 22 im Spannfuttergrundkörper 1a anliegt, sodass sich das Rohrelement 13 in diese Richtung nicht weiter bewegen kann.

Das Rohrelement 13 besitzt außerdem einen Innensechskant 23. Mit einem Werkzeug ist es möglich, von der Seite des Kupplungsabschnitts 6 durch die Hülse 12 und eine Durchgangsöffnung 24 im Rohrelement 13 in den Innensechskant 23 einzugreifen.

Bei Verdrehen des Rohrelements 13 geschieht folgendes:

Die Stellschraube 14 ist mit dem Rohrelement 13 drehfest verbunden. Allerdings können sich die beiden Bauteile axial zueinander verschieben. Die Stellschraube 14 ist in ein Gewinde 25 des Spannfuttergrundkörpers 1a eingeschraubt. Durch Drehen des Rohrelements 13 verdreht sich automatisch auch die Stellschraube 14, die entlang des Gewindes 25 sich axial entweder zum Werkzeug 7 hin oder von diesem weg bewegt. Auf diese Weise lässt sich ein exakter Anschlag für das Werkzeug 7 einstellen, wobei immer ein dichter, spaltfreier Übergang zwischen der Stellschraube 14 und dem Boden 10 des Werkzeugs 7 für einen möglichst ungestörten Schmier-/Kühlmittelfluss gewährleistet ist. Bei einer Drehung des Rohrelements 13, die ein Einschrauben der Stellschraube 14 bewirkt, bleibt das Rohrelement 13 ortsfest, da eine Verlagerung in Richtung Werkstück durch den Anschlagkragen 21 verhindert wird, der bei der Drehung am Absatz 22 anliegt.

In die andere axiale Richtung ist eine Bewegung des Rohrelements 13 durch die Hülse 12 limitiert, an welcher der Anschlagkragen 21 bei entsprechender Stellschraubenverdrehung zum Anliegen kommen kann.

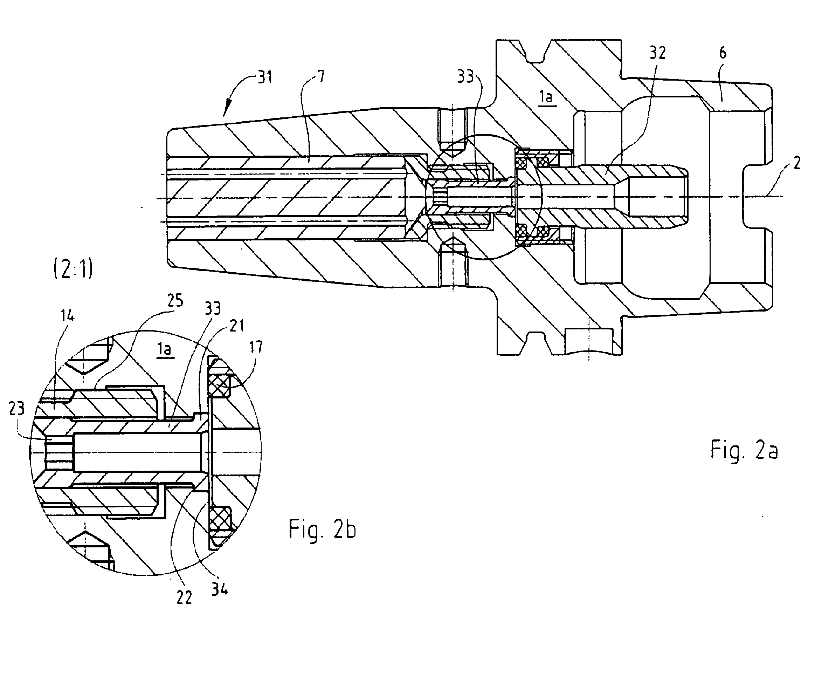

In den Figuren 2a und 2b ist ein weiteres ebenfalls nicht erfindungsgemäßes Spannfutter 31 dargestellt. Dieses Spannfutter 31 entspricht bis auf das Rohrelement 33 und die Hülse 32 der Ausführungsform gemäß den Figuren 1a und 1b. Dementsprechend weisen die verbleibenden Elemente die gleichen Bezugszeichen auf.

Beim Spannfutter 31 ist das Rohrelement 33 nicht in die Hülse 32 hineingeführt. Vielmehr folgt auf die Hülse 32 in Richtung des Werkzeugs 7 das Rohrelement 33 nach einem Spalt 34. Das Rohrelement 33 besitzt ebenfalls einen Anschlagkragen 21 zu dessen axialer Sicherung. In Richtung Kupplungsabschnitt 6 kann das Rohrelement 33 an der Hülse 32 zum Anschlag kommen.

Die Funktionalität beim Zusammenspiel der Stellschraube 14 mit dem Rohrelement 33 entspricht der wie für das Spannfutter 1 erklärt.

Durch das Aneinandergrenzen des Rohrelements 33 an die Hülse 32 ohne ein Ineinanderschieben dieser Teile kann ein Dichtelement, wie zum Beispiel die Lippendichtung 20 gemäß des Spannfutters 1, eingespart werden.

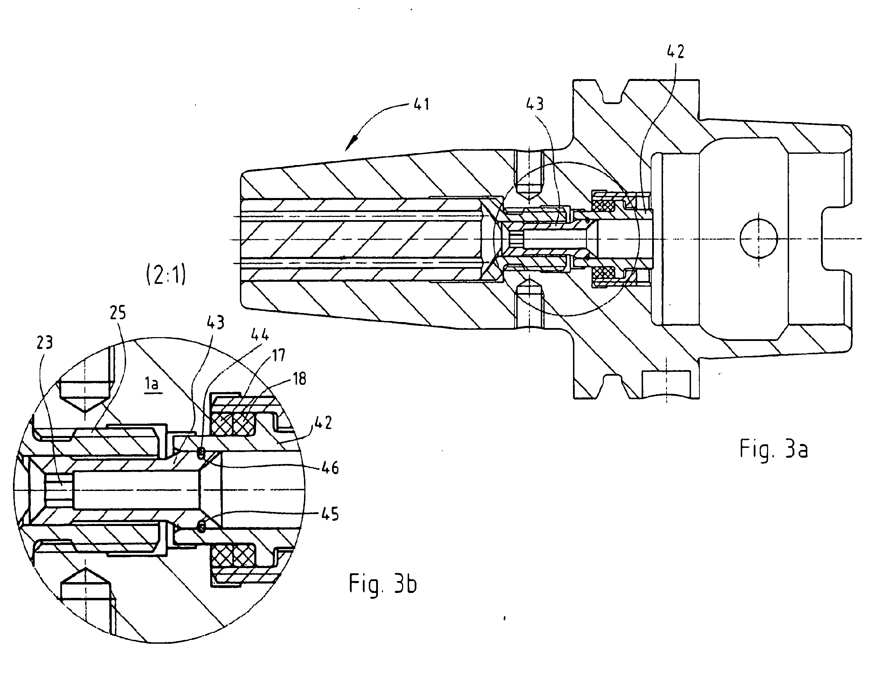

Eine dritte Ausführungsform eines nicht erfindungsgemäßen Spannfutters 41 ist in den Figuren 3a und 3b gezeigt. Alle Teile entsprechen den Ausführungsformen der Spannfutter 1, 31 mit Ausnahme der Hülse 42 und des Rohrelements 43. Wie beim Spannfutter 1 ragt das Rohrelement 43 in die Hülse 42 hinein. Bei dieser Ausführungsform ist das Rohrelement 43 axial in beide Richtungen durch ein Ringelement 44 gesichert, das einerseits in einer Nut 45 in der Hülse 42 und andererseits in einer Nut 46 des Rohrelements 43 so eingelegt ist, dass eine axiale Verschiebung in beide Richtungen, abgesehen von einem Spiel, blockiert wird.

Durch diese Lagerung bleibt das Rohrelement 43 drehbar, verliert jedoch die zur Ausführungsform gemäß der 1a und 1b beschriebene Funktionalität im Hinblick auf das Zusammenwirken mit der Stellschraube 14 nicht.

Bei einem Drehen des Rohrelements 43 über den Innensechskant 23 wird die Stellschraube 14 in axialer Richtung entweder ein- oder ausgeschraubt und damit axial verschoben.

Die Hülse 42 ist ebenfalls über zwei O-Ringe 17, 18 elastisch gelagert, jedoch zu den Ausführungsformen 1,31 verkürzt ausgeführt für eine andere Art der Kühl /Schmiermittelübergabe.

Durch die axiale Sicherung des Rohrelements 43 über das Ringelement 44 kann ein Anschlag bzw. Gegenanschlag so wie in den zuvor beschriebenen Ausführungsformen 1, 31 für das Rohrelement 43 entfallen.

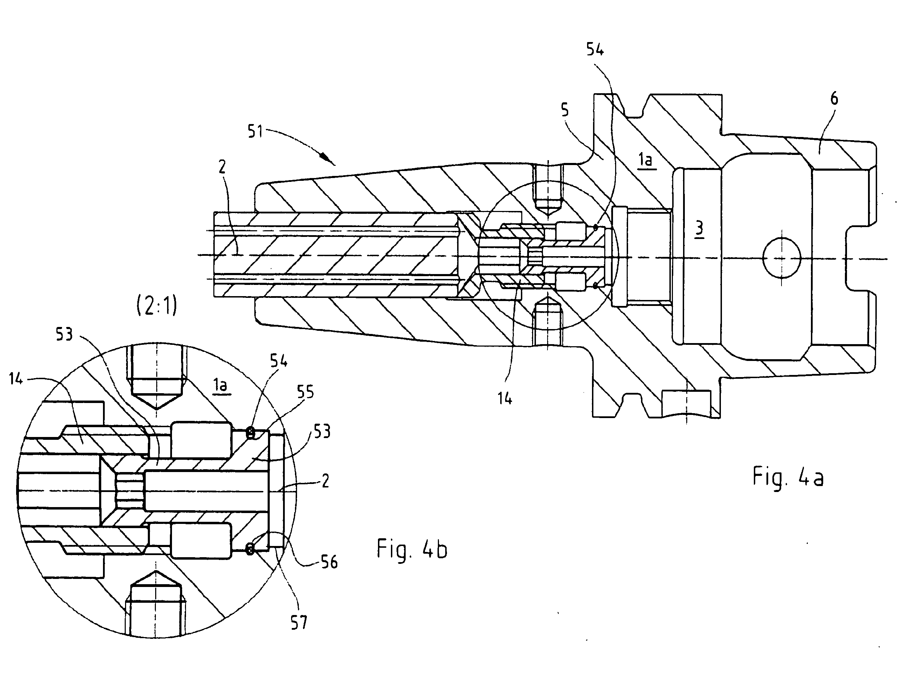

Ein weiteres ebenfalls nicht erfindungsgemäßes Spannfutter 51 ist in den Figuren 4a und 4b abgebildet. Dieses entspricht bis auf das Rohrelement 53 im Wesentlichen den Spannfutterausführungsbeispielen 1, 31, 41. Bei dem Spannfutter 51 ist keine Hülse 12 vorhanden. Das Rohrelement 53 ist unmittelbar im Grundkörper 1a des Spannfutters 21 gelagert. Hierzu ist in der Bohrung 3 im Mittelabschnitt 5 eine Ringnut 54 eingebracht und in das Rohrelement 53 ebenfalls eine Ringnut 55 eingearbeitet. In das Volumen der beiden Nuten 54 und 55 ist ein Ringelement 56 eingelegt, das eine axiale Verschiebung des Rohrelements 53 entlang der Längsachse 2 blockiert. Zusätzlich ist in Richtung des Kupplungsabschnitts 6 im Spannfuttergrundkörper 1a ein Absatz 57 ausgebildet, der eine axiale Verschiebung des Rohrelements 53 in Richtung des Kupplungsabschnitts 6 verhindert.

Im Übrigen entspricht die Funktionalität der den Ausführungsformen 1, 31 sowie 41, bezogen auf das Zusammenspiel des Rohrelements 53 mit der Stellschraube 14.

Wenn in den Spannfutterausführungsformen 1, 21 noch eine axiale Verschiebbarkeit in einem vordefinierten Ausmaß in Richtung des Kupplungsabschnitts ermöglicht ist, ist durch die Sicherungsmittel in den Spannfuttern 41 und 51 das Rohrelement in beide axiale Richtungen gegebenenfalls bis auf ein Spiel festgelegt.

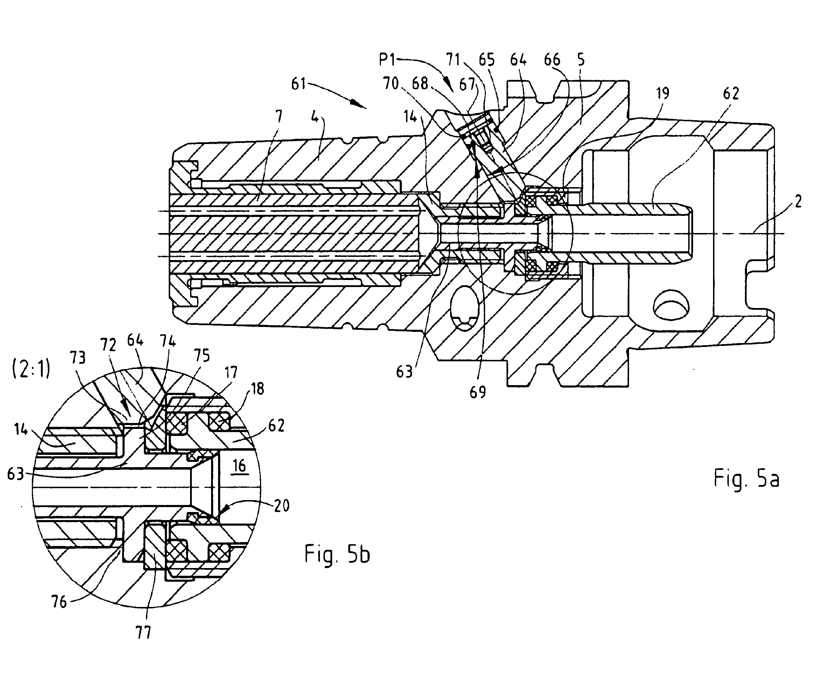

In den Figuren 5a und 5b ist eine alternative ebenfalls nicht erfindungsgemäße Ausführungsform eines Spannfutters 61 gezeigt, welches bis auf ein Rohrelement 63 und einen drehbar gelagerten Bolzen 64 im Wesentlichen den Ausführungsformen gemäß der Figuren 1a und 1b bis 3a und 3b entspricht. Bei dem Spannfutter 61 ist eine zu einer Längsachse 2 des Spannfutters 61 radial betätigbare Verstellung der Spanntiefe möglich. Das Spannfutter 61 gemäß Figur 5a und 5b ist beispielhaft als Hydro-Dehnspannfutter ausgebildet. Die Erfindung beschränkt sich jedoch nicht auf die in den Figuren gezeigten Arten von Spannfuttern, sondern betrifft ebenso andere Spannfutter, z. B. Schrumpffutter.

Gemäß Figur 5a, 5b wird eine Stellschraube 14, die gemäß den

Stellschrauben 14 der Ausführungsbeispiele aus den Figuren 1a und 1b bis 4a und 4b ausgebildet ist, über das Rohrelement 63 axial eingestellt.

Der Bolzen 64 ist in einer Öffnung 66 in einem Mittelabschnitt 5 des Spannfutters 61 drehbar gelagert und über einen O-Ring 65 abgedichtet aufgenommen. Der Bolzen 64 bzw. dessen Längsachse 67 und die Öffnung 66 ist gegenüber der Längsachse 2 in einem Spannabschnitt 4, in dem ein Werkzeug 7 (nur teilweise gezeigt) eingespannt ist, schräg unter einem Winkel von ca. 55 Grad geneigt. Dieser Winkel kann aber auch kleiner oder größer sein, ggf. auch ca. 90 Grad oder mehr betragen.

Zu seiner axialen Fixierung weist der Bolzens 64 einerseits einen umlaufenden Absatz 68 auf, der an einem Gegenabsatz 69 in der Öffnung 66 ansteht und andererseits ist in einer Nut der Öffnung 66 ein Sicherungsring 70 vorgesehen, gegen den der Bolzen 64 mit seinem äußeren Ende ansteht.

Zum Eingreifen eines Drehwerkzeugs in den Bolzen 64 ist in dessen von außen zugänglichem Kopfbereich eine Eingreifkontur 71, z. B. in Form eines Innensechskants, ausgebildet. So kann vorteilhafterweise eine Bedienung der Stellschraube 14 bzw. die Einstellung der Spanntiefe des Spannfutters 64 in Richtung des Pfeils

Mit der Drehung des Bolzens links oder rechts herum wird das Rohrelement 63 entsprechend verdreht und damit die Stellschraube 14 gemäß der zuvor beschriebenen Zusammenhängen axial in Richtung des Spannabschnitts 4 oder in Richtung einer Hülse 62. Hierzu sind die Stellschraube 14 und das Rohrelement 63 insbesondere drehfest miteinander und axial verschieblich zueinander verbunden.

Zur Übertragung der Drehbewegung des Bolzens 64 auf das Rohrelement 63 ist ein Kegelradgetriebe 72 mit passend ineinandergreifenden Zahnprofilen 73, 74 vorgesehen. Das

Kegelradgetriebe 72 umfasst hierfür das am Bolzen 64 stirnseitig umlaufende Zahnprofil 73, das am zum Rohrelement 63 reichenden Ende des Bolzens 64 vorhanden ist. Am Rohrelement 63 ist das Zahnprofil 74 z. B. als Zahnkrone an einem umlaufenden Kragen 75 ausgebildet.

Das Rohrelement 63 ist axial in seiner Position in dem Mittelabschnitt 5 über den Kragen 75 fixiert, der an einem Absatz 76 im Mittelabschnitt 5 ansteht. In Richtung zur Hülse 62 ist der Kragen 75 gegen ein Ringelement 77 gesichert, an das sich die Hülse 62 mit zwei O-Ringen 17, 18 anschließt. Die Hülse 62 ist über ein Schraubenelement 19 im Spannfutter 61 eingeschraubt.

Das Rohrelement 63 reicht mit seinem spannabschnittfernen Ende in eine Öffnung 16 der Hülse 62, in welcher das Rohrelement 63 drehgelagert ist. Über eine Lippendichtung 20 ist ein dichter Übergang zwischen den beiden Elementen 62 und 63 realisiert.

Figur 6a zeigt stark schematisiert und unter Weglassung insbesondere eines Spannfuttergrundkörpers eine erste erfindungsgemäße alternative Anordnung mit einem Rohrelement 78, einer Stellschraube 79 und einem mit dem Rohrelement 78 in Wirkverbindung stehenden Bolzen 80. Weitere Elemente des Spannfutters sind in den Figuren 6a und 6b nicht dargestellt, entsprechen aber im Wesentlichen der nicht erfindungsgemäßen Ausführungsform gemäß der Figuren 5a, 5b. Das zu der Anordnung gemäß der Figuren 6a, 6b gehörige nicht dargestellte Spannfutter ist bezüglich einer Längsachse 2 des betreffenden Spannfutters zur axialen Einstellung der Stellschraube und damit eines im Spannfutter eingesetzten Werkzeugs radial betätigbar. Hierzu kann das Rohrelement 78 und damit die Stellschraube 79 über ein Verdrehen des Bolzens 80 im oder gegen den Uhrzeigersinn im entsprechend zusammengebauten Zustand des betreffenden Spannfutters verdreht werden.

Der Bolzen 80 ist entsprechend des Bolzens 64 im Ausführungsbeispiel gemäß der Figuren 5a und 5b im zusammengebauten Zustand des betreffenden Spannfutters in einer dazugehörigen radial zur Längsachse 2 verlaufenden Öffnung in einem Mittelabschnitt des Spannfutters drehbar gelagert und über einen O-Ring 81 abgedichtet in der Öffnung aufgenommen. Der Bolzen 80 bzw. dessen Längsachse 82 ist gegenüber der Längsachse 2 unter einem Winkel von ca. 90° ausgerichtet. Zur axialen Fixierung bzw. Positionierung in der entsprechenden Bohrung im Mittelabschnitt des Spannfutters ist der Bolzen 80 über einen entsprechenden Nuten- bzw. Sicherungsring 83, beispielsweise einen Innen-Sicherungsring gesichert. Außerdem ist am Bolzen 80 ein umlaufender Absatz 84 vorhanden, der an einem nicht gezeigten Gegenabsatz in der betreffenden Öffnung im Mittelabschnitt ansteht.

Zum Einwirken von außen auf das einsatzbereite Spannfutter kann mit einem Drehwerkzeug, wie beispielsweise einem Schraubenschlüssel mit Außen-Sechskantprofil, in den Bolzen 80 in dessen von außen am Mittelabschnitt zugänglichem Kopfbereich 85 eingegriffen werden. Zur Drehmomentübertragung weist der Bolzen 80 eine Eingreifkontur 86, z. B. mit einem Innensechskantprofil am Kopfbereich 85 auf. Dies entspricht im Wesentlichen der Anordnung gemäß den Figuren 5a und 5b, sodass die Bedienung der Stellschraube 79 und damit die Einstellung der Spanntiefe des Spannfutters aus radialer Richtung erfolgt.

An einem dem Kopfbereich 85 entgegengesetzten inneren Ende des Bolzens 80 ist stirnseitig und umfänglich ein Zahnprofil 87 vorhanden, das mit einem am Rohrelement 78 ausgebildeten Zahnprofil 88 an einem Kragen 89 des Rohrelements 78 zusammenwirken kann bzw. in Eingriff steht. Damit erfolgt entsprechend des Ausführungsbeispiels gemäß der Figuren 5a und 5b eine Übertragung der Drehbewegung des Bolzens 80 auf das Rohrelement 78, wobei die jeweilige Drehbewegung links- oder rechtsherum möglich ist.

Das Rohrelement 78 ist in seiner Position in dem Mittelabschnitt des Spannfutters unter anderem über einen Kragen 90 mit einem umfänglich umlaufenden O-Ring 91 dichtend gesichert untergebracht. Eine Durchgangsöffnung 92 in Längsrichtung des Rohrelements 78 weist ein Innensechskantprofil in einem Abschnitt auf, in welchem außen das Zahnprofil 88 ausgebildet ist.

Das Innensechskantprofil ist passend auf ein entsprechendes Außensechskantprofil abgestimmt, das über wesentliche Abschnitte an der Stellschraube 79 vorhanden ist, sodass bei eingesteckter Stellschraube 79 in der Durchgangsöffnung 92 des Rohrelements 78 die Stellschraube 79 axial verschieblich, aber verdrehsicher aufgenommen ist und bei Verdrehen des Rohrelements 78 mitgedreht wird. Vorne an einem dem Spannabschnitt des betreffenden Spannfutters zugewandten Abschnitt der Stellschraube 79 ist ein nicht im Detail dargestelltes Außengewinde 93 vorhanden, das sich bis an eine umfänglich umlaufende Nut 79a der Stellschraube 79 in Zwischenbereichen 79b zwischen gewindefreien Sechskantteilflächen 79c verläuft. Das Außengewinde 93 wirkt mit einem passenden Innengewinde in einer Öffnung im Grundkörper des Spannfutters zusammen, sodass bei Verdrehen der Stellschraube 79 diese axial relativ zum Grundkörper des Spannfutters bewegbar stufenlos verstellbar ist und somit die axiale Einstellung des betreffenden im Spannfutter vorhandenen Werkzeugs erfolgt.

Vorne an der Stellschraube 79, anschließend an den Abschnitt mit dem Außengewinde 93, kann die Stellschraube 79 unterschiedlich geformt sich verlängern, beispielsweise trichterartig erweiternd zum zylindrischen Abschnitt des Außengewindes 93. In diesem weiteren Abschnitt, der stirnseitig als Anlage für ein positionsrichtig im Spannfutter eingesetztes Werkzeug dient, ist die in den Figuren 6a, 6b gezeigte mittige Durchgangsöffnung 94 für die Durchleitung von Kühl- bzw. Schmiermedium durch die Stellschraube 79 ebenfalls durchgehend ausgebildet.

Figur 6b zeigt die in Funktionsbereitschaft des Spannfutters (nicht gezeigt) zusammengebaute Stellschraube 79 im Rohrelement 78 mit dem am Rohrelement 78 vorhandenen Bolzen 80 in einer seitlichen Ansieht, die gegenüber der Ansicht der Figur 6a in Richtung eines Kupplungsabschnitts des betreffenden Spannfutters versetzt ist.

Figur 7 zeigt ein weiteres erfindungsgemäßes Spannfutter 95, welches eine Verstellanordnung gemäß dem in den Figuren 6a und 6b dargestellten Prinzip aufweist. Demgemäß kann über einen drehgelagerten Bolzen 96 bei dessen Bedienung durch ein Drehwerkzeug und dem Verdrehen des Bolzens 96 in eine entsprechende Drehrichtung über entsprechend aufeinander abgestimmte Zahnprofile am Bolzen 96 und an einem Rohrelement 97 das Rohrelement 97 in Drehung versetzt werden. Dabei wird eine in dem Rohrelement 97 in einer entsprechenden Öffnung eingesteckte und drehfest verbundene Stellschraube 98 verdreht. Die Stellschraube 98 ist axial verschieblich im Rohrelement 97. Ein in axialer Richtung über nahezu die gesamte Länge der Stellschraube 98 ausgebildetes Außengewinde 99 an der Stellschraube 98 wirkt dabei mit einem Innengewinde 100 an einer Wandungen einer entsprechenden Öffnung in einem Spannfuttergrundkörper 95a des Spannfutters 95 zusammen. So kann die Stellschraube 98 in einem Spannfuttergrundkörper 95a axial zur Längsachse 2 verstellt werden. Demgemäß kann ausgehend von der in Figur 7 gezeigten Stellung ein maximaler Verstellweg VW der Stellschraube 98 in Richtung zu einem Spannabschnitt 95b zurückgelegt werden.

Axial ist das drehbar im Spannfuttergrundkörper 95a aufgenommene Rohrelement 97 einerseits über einen Absatz 101 und andererseits über einen Springring 102 im Spannfuttergrundkörper 95a fixiert.

Eine zu Figur 7 alternative Anordnung mit einem erfindungsgemäßen Spannfutter 103 zeigt Figur 8. Das Spannfutter 103 umfasst einen drehbar gelagerten Bolzen 104, ein mit dem Bolzen 104 über entsprechende Zahnprofilabschnitte zusammenwirkendes Rohrelement 105 und eine Stellschraube 106. Die Stellschraube 106 ist drehfest mit dem Rohrelement 105 verbunden, jedoch axial relativ zum Rohrelement 105 bewegbar. Das Rohrelement 105 ist über Absätze in einem Spannfuttergrundkörper 103a axial fixiert, wobei ein von einem Spannabschnitt 107 abgewandtes Ende an einem durch einen im Spannfuttergrundkörper 103a einschraubbaren Deckelelement 108 gebildeten Absatz gesichert ist. Das Deckelelement 108 ist hierzu in einer Durchgangsöffnung im Spannfutter 103 eingeschraubt, wobei an einem durchmessererweiterten Abschnitt des Deckelelements 108 ein Außengewinde 109 vorgesehen ist, welches zum Einschrauben im Spannfuttergrundkörper 103a mit einem entsprechenden Gegengewinde 100c in der Durchgangsöffnung zusammenwirkt. Das Deckelelement 108 greift mit einem hohlen Verlängerungsabschnitt in die Stellschraube 106 und ist zu dieser über einen O-Ring 108a abgedichtet. Die Stellschraube 106 kann sich also axial relativ zum Verlängerungsabschnitt des Deckelelements 108 verschieben.

Die Stellschraube 106 ist entsprechend den
Ausführungsbeispielen gemäß Figur 1a bis Figur 5b im zum Spannabschnitt 107 gelegenen Ende trichterförmig ausgebildet, welcher auf einen Schaft eines eingesetzten Werkzeuges einwirken kann.

In den Figuren 7 und 8 wirken der Bolzen 96 bzw. 104 und das Rohrelement 97 bzw. 105 nach dem Prinzip gemäß der Figuren 6a, 6b zusammen.

### Bezugszeichenliste:

- 1: Spannfutter
- 1a: Spannfuttergrundkörper
- 2: Längsachse
- 3: Bohrung
- 4: Spannabschnitt
- 5: Mittelabschnitt
- 6: Kupplungsabschnitt
- 7: Werkzeug
- 8: Mediumkanal
- 9: Mediumkanal
- 10: Bodenfläche
- 11: Vorrichtung zur Zuführung von Kühl-/ Schmiermedium
- 12: Hülse
- 13: Rohrelement
- 14: Stellschraube
- 15: Öffnung
- 16: Öffnung
- 17: O-Ring
- 18: O-Ring
- 19: Schraubenelement
- 20: Lippendichtung
- 21: Anschlagkragen (Sicherungsmittel)
- 22: Absatz (Sicherungsmittel)
- 23: Innensechskant
- 24: Durchgangsöffnung
- 25: Gewinde
- 31: Spannfutter
- 32: Hülse
- 33: Rohrelement
- 34: Spalt
- 41: Spannfutter
- 42: Hülse
- 43: Rohrelement
- 44: Ringelement
- 45: Nut
- 46: Nut
- 51: Spannfutter
- 53: Rohrelement
- 54: Ringnut
- 55: Ringnut
- 56: Ringelement
- 57: Absatz
- 61: Spannfutter
- 62: Hülse
- 63: Rohrelement
- 64: Bolzen
- 65: O-Ring
- 66: Öffnung
- 67: Längsachse
- 68: Absatz
- 69: Gegenabsatz
- 70: Sicherungsring
- 71: Eingreifkontur
- 72: Kegelradgetriebe
- 73: Zahnprofil
- 74: Zahnprofil
- 75: Kragen
- 76: Absatz
- 77: Ringelement
- 78: Rohrelement
- 79: Stellschraube
- 79a: Nut
- 79b: Zwischenbereich
- 79c: Sechskantteilfläche
- 80: Bolzen
- 81: O-Ring
- 82: Längsachse
- 83: Sicherungsring
- 84: Absatz
- 85: Kopfbereich
- 86: Eingreifkontur
- 87, 88: Zahnprofil
- 89: Kragen
- 90: Kragen
- 91: O-Ring
- 92: Durchgangsöffnung
- 93: Außengewinde
- 94: Durchgangsöffnung
- 95: Spannfutter
- 95a: Spannfuttergrurdkörper
- 95b: Spannabschnitt
- 96: Bolzen
- 97: Rohrelement
- 98: Stellschraube
- 99: Außengewinde
- 100: Innengewinde
- 101: Absatz
- 102: Springring
- 103: Spannfutter
- 103a: Spannfuttergrundkörper
- 104: Bolzen
- 105: Rohrelement
- 106: Stellschraube
- 107: Spannabschnitt
- 108: Deckelelements
- 108a: O-Ring
- 109: Außengewinde
- 110: Gegengewinde

## Patentansprüche

1. Spannfutter für ein Werkzeug (7) mit einer Vorrichtung (11) zur Zuführung eines Kühl- und/oder Schmiermediums an einen Mediumkanal (8, 9) eines in dem Spannfutter gehaltenen Werkzeugs (7), wobei im Spannfutter eine Stellschraube (79) angeordnet ist, die als Anschlag für das im Spannfutter gehaltene Werkzeug (7) dient, wobei die Stellschraube (79) gegenüber dem Spannfutter in axialer Richtung des Spannfutters verstellbar ist und wobei die Stellschraube (14) mit einem Rohrelement (78) zusammenwirkt, wobei Mittel (80) vorgesehen sind, um das Rohrelement (78) von außerhalb des Spannfutters in radialer Richtung des Spannfutters zu betätigen, wobei die Mittel ein von außerhalb des Spannfutters betätigbares drehgelagertes Koppelelement (80) umfassen, das mit dem Rohrelement (78) gekoppelt ist wobei das Rohrelement (78) im Spannfutter drehbar aufgenommen ist, wobei Sicherungsmittel vorgesehen sind, die eine axiale Verschiebung des Rohrelements (78) zumindest in Richtung der Stellschraube (79) begrenzen, wobei das Rohrelement (78) und die Stellschraube (79) drehfest, aber axial verschiebbar zueinander verbunden sind, das Rohrelement auf der Stellschraube steckt und als Verdrehsicherung zwischen der Stellschraube und dem Rohrelement ein Schiebesitz vorgesehen ist, **dadurch gekennzeichnet, dass** ein Innensechskantprofil (92) des Rohrelements (78) passend auf einen Außensechskant-Profilabschnitt (79b, 79c) der Stellschraube (79) abgestimmt ist und dass an diesem Außensechskant-Profilabschnitt (79b, 79c) der Stellschraube ein Außengewinde (93) vorhanden ist.

## Claims

1. Chuck for a tool (7) with a device (11) for supplying a cooling and/or lubricating medium to a medium channel (8, 9) of a tool (7) held in the chuck, wherein in the chuck an adjusting screw (79) serving as a stop for the tool (7) held in the chuck is arranged, wherein the adjusting screw (79) is adjustable with respect to the chuck in axial direction of the chuck and wherein the adjusting screw (14) cooperates with a tubular member (78), wherein means (80) are provided for actuating the tubular member (78) from outside the chuck in radial direction of the chuck, wherein the means comprise a coupling member (80) adapted to be actuated from outside the chuck and rotatably mounted, which is coupled to the tubular member (78), wherein the tubular member (78) is mounted rotatably in the chuck, wherein securing means are provided which limit the axial displacement of the tubular member (78) at least in the direction of the adjusting screw (79), wherein the tubular member (78) and the adjusting screw (79) are connected to each other in a non-rotatable but axially displaceable way and wherein the tubular member is plugged onto the adjusting screw and a sliding fit is provided as anti-twist protection between the adjusting screw and the tubular member, **characterized in that** an internal hexagonal contour (92) of the tubular member (78) is matched fittingly to an externally hexagonally shaped section (79b, 79c) of the adjusting screw (79) and that this externally hexagonally shaped section (79b, 79c) of the adjusting screw has a male thread (93).

## Revendications

1. Mandrin de serrage pour un outil (7), avec un dispositif (11) pour l'amenée d'un fluide réfrigérant et/ou lubrifiant à un canal de fluide (8, 9) d'un outil (7) maintenu dans le mandrin de serrage, une vis de réglage (79) étant disposée dans le mandrin de serrage, laquelle sert de butée pour l'outil (7) maintenu dans le mandrin de serrage, la vis de réglage (79) étant réglable par rapport au mandrin de serrage dans la direction axiale du mandrin de serrage, et la vis de réglage (14) coopérant avec un élément tubulaire (78), des moyens (80) étant prévus pour actionner l'élément tubulaire (78) de l'extérieur du mandrin de serrage dans la direction radiale du mandrin de serrage, lesdits moyens comprenant un élément d'accouplement(80) à palier rotatif, accouplé à l'élément tubulaire (78) et actionnable de l'extérieur du mandrin de serrage, l'élément tubulaire (78) étant monté de manière à pouvoir être rotatif dans le mandrin de serrage, des moyens de sécurité étant prévus, lesquels limitent un déplacement axial de l'élément tubulaire (78) au moins dans la direction de la vis de réglage (79), l'élément tubulaire (78) et la vis de réglage (79) étant raccordés l'un à l'autre de manière solidaire en rotation, mais avec mobilité axiale, l'élément tubulaire étant fiché sur la vis de réglage et un ajustement appuyé étant prévu comme blocage de rotation entre la vis de réglage et l'élément tubulaire, **caractérisé en ce qu'**un profilé à 6 pans creux (92) de l'élément tubulaire (78) est ajusté à une section de profilé à 6 pans extérieurs (79b, 79c) de la vis de réglage (79), et **en ce qu'**un filet extérieur (93) est présent sur ladite section de profilé à 6 pans extérieurs (79b, 79c) de la vis de réglage.
